# EUROPÄISCHE PATENTSCHRIFT

(11) **EP 3 224 931 B1**
(45) Veröffentlichungstag und Bekanntmachung des Hinweises auf die Patenterteilung: **04.03.2020**
(21) Anmeldenummer: 15798129.1
(22) Anmeldetag: 23.11.2015
(51) Int. Cl.: H02K 5/20, H02K 11/33, H02K 9/16

(54) **MOTORSYSTEM**
MOTOR SYSTEM
SYSTÈME MOTORISÉ

(30) Priorität: 24.11.2014 DE 102014223909
(43) Veröffentlichungstag der Anmeldung: 04.10.2017
(73) Patentinhaber: Lenze Drives GmbH, 32699 Extertal (DE)
(72) Erfinder: WETTLAUFER, Jan, 31789 Hameln (DE); MAGHNAOUI, Abdenbi, 33605 Bielefeld (DE); JONSKY, Torben, 30167 Hannover (DE); GRABS, Volker, 37619 Bodenwerder (DE); EHLICH, Martin, 32689 Kalletal (DE)
(74) Vertreter: Patentanwälte Ruff, Wilhelm, Beier, Dauster & Partner mbB
(86) Internationale Anmeldenummer: PCT/EP2015/077389
(87) Internationale Veröffentlichungsnummer: WO 2016/083320

(56) Entgegenhaltungen:
- WO-A2-00/74204
- DE-A1- 4 422 622
- DE-A1-102012 218 444
- FR-A1- 2 145 704
- FR-A1- 2 986 673

## Beschreibung

Die Erfindung betrifft ein Motorsystem.

FR 2 986 673 A1 offenbart eine elektrische Maschine nach dem Oberbegriff des Anspruchs 1 mit einem Gehäuse, wobei das Gehäuse eine Anzahl von Kanälen aufweist.

WO 00/74204 A2 offenbart eine Motor-Gebläseeinheit, die ein Strömungsgehäuse und ein Gehäuse aufweist, wobei das Gehäuse von einem Medium umspült ist.

FR 2 145 704 A1 offenbart ein Gehäuse eines Elektromotors, das Kühlrippen an einer Gehäuseaußenseite aufweist.

De 10 2012 218 444 A1 offenbart eine elektrische Antriebsanordnung mit einer Kühleinheit, die eine Einlassöffnung und eine Auslassöffnung aufweist.

DE 44 22 622 A1 offenbart eine Asynchronmaschine.

Der Erfindung liegt die Aufgabe zugrunde, ein Motorsystem mit im Vergleich zum Stand der Technik optimierten thermischen Eigenschaften zur Verfügung zu stellen.

Die Erfindung löst diese Aufgabe durch ein Motorsystem nach Anspruch 1.

Das Motorsystem weist zunächst einen Stator, einen Rotor und eine Motorwelle auf. Die Motorwelle ist mit dem Rotor drehfest mechanisch gekoppelt. Die Motorwelle definiert eine radiale Richtung und eine axiale Richtung des Motorsystems. Die axiale Richtung ist diejenige Richtung, in der sich die Drehachse der Motorwelle erstreckt, die radiale Richtung ist die Richtung radial zur Drehachse der Motorwelle.

Der Stator kann herkömmlich zur Erzeugung eines magnetischen Drehfeldes dienen. Der Stator kann Statorpole aufweisen, die mit Einzelwicklungen versehen sind.

Der Rotor kann zur Erzeugung eines rotorfesten Magnetfelds dienen, das mit dem mittels des Stators erzeugten magnetischen Drehfeld derart wechselwirkt, dass sich ein gewünschtes Motordrehmoment ergibt, welches nach außen über die Motorwelle übertragen bzw. abgegeben wird.

Das Motorsystem weist weiter wärmeerzeugende Bauelemente auf, beispielsweise Leistungshalbleiter, IGBT-Module, Leistungsmodule, Ansteuerelektronik. Stromsensorik, etc. Die wärmeerzeugenden Bauelemente können zur Erzeugung des magnetischen Statordrehfelds dienen.

Das Motorsystem weist weiter eine Steuereinrichtung auf, die dazu ausgebildet ist, einen Betrieb des Motorsystems zu steuern. Die Steuereinrichtung steht mit den wärmeerzeugenden Bauelementen in Wirkverbindung und kann beispielsweise zusammen mit diesen einen Frequenzumrichter bilden.

Das Motorsystem weist weiter ein Gehäuse auf.

Das Gehäuse weist eine erste, zentrale bzw. innere, insbesondere zylindrische, Kammer auf, wobei der Stator, der Rotor und die wärmeerzeugenden Bauelemente (und gegebenenfalls die Steuereinrichtung) innerhalb der ersten Kammer angeordnet sind.

Die zweiten Kammern bzw. die durch die zweiten Kammern gebildeten axial verlaufenden geschlossenen Kanäle können oberflächenvergrößernde Strukturen aufweisen, wie beispielsweise Rippen.

Die wärmeerzeugenden Bauelemente sind mit einer Außenwand bzw. äußeren Berandung bzw. begrenzenden Seitenflächen der ersten Kammer, insbesondere wärmeleitend, verbunden bzw. mechanisch gekoppelt. Die erste Kammer kann gemäß einer vorgegebenen Dichtigkeitsklasse nach außen bzw. gegenüber der Umgebung abgedichtet sein.

Das Gehäuse weist weiter eine Anzahl (beispielsweise zwei bis zehn, bevorzugt vier) von zweiten, insbesondere zylindrischen und axial verlaufenden, Kammern oder Kanälen auf, wobei die zweiten Kammern bzw. die Kanäle die erste Kammer, teilweise oder vollständig, radial außen umgeben. Mit anderen Worten umgeben die zweiten Kammern bzw. die Kanäle die erste Kammer außenseitig. Die zweiten Kammern bzw. die Kanäle sind, insbesondere wärmeleitend, mit der Außenwand der ersten Kammer verbunden, beispielsweise indem die erste Kammer und die zweiten Kammern teilweise gemeinsame Wandabschnitte aufweisen. Die zweiten Kammern bilden geschlossene axial verlaufende Kanäle zur Führung eines Kühlmediums, insbesondere in Form von Kühlluft. In die Kanäle kann beispielsweise von außen Kühlluft eingeblasen werden.

Die erste Kammer kann axial in eine Anzahl von Teilkammern segmentiert sein, die beispielsweise mittels thermischer Sperrschichten voneinander thermisch isoliert sein können. Für diesen Fall können beispielsweise der Stator und der Rotor in einer ersten Teilkammer angeordnet sein und die wärmeerzeugenden Bauelement können in einer zweiten Teilkammer angeordnet sein, wobei die erste und die zweite Teilkammer zueinander axial versetzt und voneinander thermisch isoliert sind.

Das Gehäuse kann einen inneren Zylinder bzw. zylindrischen Abschnitt aufweisen, der die erste Kammer bildet, wobei eine Mantelfläche des Zylinders bzw. des zylindrischen Abschnitts die Außenwand bildet. Der innere Zylinder kann sich axial erstrecken.

Das Gehäuse kann eine Anzahl von äußeren Zylindern aufweist, die die Anzahl von zweiten Kammern bilden. Die äußeren Zylinder können sich axial erstrecken.

Das Gehäuse kann ein zylindrisches Metall-Stranggussprofil aufweisen bzw. ein zylindrisches Metall-Stranggussprofil sein, welches sich axial erstreckt.

Das Motorsystem kann ein erstes und ein zweites Lagerschild aufweisen, wobei eine Grundfläche des inneren Zylinders durch das erste Lagerschild gebildet wird und eine Deckfläche des inneren Zylinders durch das zweite Lagerschild gebildet wird. Mit anderen Worten wird die erste, zentrale oder innere Kammer durch einen Zylinder gebildet, wobei die Mantelfläche des Zylinders eine Außenwand in axialer Richtung bildet und die Lagerschilde die stirnseitigen oder radial verlaufenden Außenwände bilden.

Motorlager der Lagerschilde können derart angeordnet sein, dass die Drehachse der Motorwelle kollinear oder parallel zur axialen Erstreckung des inneren bzw. der äußeren Zylinder liegt.

Eine sich radial erstreckende bzw. radiale Querschnittsfläche (d.h. eine Querschnittsfläche in einer Querschnittsebene, die senkrecht auf die Drehachse der Motorwelle steht) des Gehäuses kann eine zentrale Hauptdurchgangsöffnung und eine Anzahl von die Hauptdurchgangsöffnung radial umgebende Nebendurchgangsöffnungen zur Führung der Kühlluft enthalten. Eine radiale Querschnittsfläche der Hauptdurchgangsöffnung kann größer sein als jeweilige radiale Querschnittsflächen der Nebendurchgangsöffnungen. Von den Flächenschwerpunkten der Durchgangsöffnungen des zylindrischen Gehäuseabschnitts kann der Flächenschwerpunkt der Hauptdurchgangsöffnung dem Flächenschwerpunkt des Gesamtquerschnitts am nächsten sein.

Der Stator und/oder die wärmeerzeugende Bauelemente kann/können innerhalb der radialen Ausdehnung der Hauptdurchgangsöffnung des zylindrischen Gehäuseabschnitts liegen.

Die wärmeerzeugenden Bauelemente können innerhalb eines vorgegebenen axialen Abschnitts mit definierter axialer Ausdehnung, beispielsweise1 bis 10 cm, mit der Außenwand der ersten Kammer wärmeleitend verbunden sein.

Die wärmeerzeugenden Bauelemente können innerhalb eines axialen Abschnitts des zylindrischen Gehäuses über den Umfang der Hauptdurchgangsöffnung verteilt angeordnet sein.

Der Stator und die Leistungsmodule können in axialer Folge innerhalb der Hauptdurchgangsöffnung desselben axialen Gehäuseabschnitts angeordnet sein.

Die wärmeerzeugenden Bauelemente können derart in wärmeleitender Verbindung zu dem zylindrischen Gehäuseabschnitt bzw. der Außenwand der ersten Kammer stehen, dass sie den überwiegenden (d.h. > 50%) Teil ihrer Wärmeleistung über den zylindrischen Gehäuseabschnitt bzw. die Außenwand der ersten Kammer abführen.

Verschiedene Komponenten des Gehäuses können voneinander durch thermische Sperrschichten entkoppelt sein, die zwischen den Kontaktflächen der Komponenten angeordnet sind.

Statorpole des Stators können derart in wärmeleitender Verbindung mit dem zylindrischen Gehäuseabschnitt bzw. der Außenwand der ersten Kammer stehen, dass Sie den überwiegenden (d.h. > 50%) Teil ihrer Wärmeleistung über den zylindrischen Gehäuseabschnitt bzw. die Außenwand der ersten Kammer abführen.

Zur Reduzierung des Wärmeleitkontaktwiderstandes können plastische wärmeleitungsverbessernde Füllstoffe zwischen den wärmeerzeugenden Bauelementen und dem zylindrischen Gehäuseabschnitt bzw. der Außenwand der ersten Kammer angeordnet sein.

Die Wicklungen der Statorpole können bei einer thermischen Entkopplung derart bestromt werden, dass eine zeitlich mittlere Betriebstemperatur (z.B. 140°C) des Stators signifikant (bis zu 100 K) über der zulässigen Sperrschichttemperatur der Leistungshalbleiter liegt, d.h. keine signifikante Wärmeübertragung von den Wicklungen zu den wärmeerzeugenden Bauelementen erfolgt.

Insbesondere bei neuartigen Halbleiterwerkstoffen (z. B. Silziumcarbid, etc.) ist es möglich, die wärmeerzeugenden Bauelemente über die Wicklungen der Statorpole zu entwärmen. Eine thermische Entkopplung muss in diesem Fall vermieden werden.

Die wärmeerzeugenden Bauelemente können direkt oder über wenigstens ein Zwischenstück aus gut wärmeleitendem Material mit dem zylindrischen Gehäuseabschnitt bzw. der Außenwand der ersten Kammer mechanisch gekoppelt sein.

Zur Reduzierung des Wärmeleitkontaktwiderstandes können an den bei der Wärmeleitung beteiligten Komponenten Mittel zur Erzeugung von Normalkräften zwischen den entsprechenden Kontaktoberflächen vorgesehen sein. Die Mittel zur Erzeugung der Normalkräfte können auf elastischen Strukturen basieren. Es können beispielsweise Federringe oder mit Druckluft befüllte Hohlringe verwendet werden. Es können auch die elastischen Materialeigenschaften der Komponenten selbst, beispielsweise des Gehäuses verwenden werden (Schraubverbindung). Die Normalkräfte können auch durch die innere Restspannung nach einem axialen Einpressen in das zylindrische Gehäuse erzeugt werden.

Das Gehäuse kann einen inneren Zylinder aufweisen, der die erste Kammer bildet, wobei eine Mantelfläche des Zylinders die Außenwand bildet. Das Gehäuse kann eine Anzahl von äußeren Zylindern aufweisen, die die Anzahl von zweiten Kammern bilden.

Das Gehäuse kann ein zylindrisches Stranggussprofil aufweisen bzw. sein, in dem die zylindrischen Kammern gebildet sind.

Der zylindrische Gehäuseabschnitt kann mittels eines Um- oder Urformverfahren oder eines extrudierenden Verfahrens hergestellt sein, beispielsweise Strangguss, Strangpress, etc.

Das Gehäuse bzw. Teile davon können aus gut wärmeleitendem Material bestehen, beispielsweise aus einer Aluminiumlegierung.

Die Kühlluft kann über natürliche Konvektion und/oder über Zwangskonvektion in den Kanälen und an der Oberfläche bewegt werden.

Das zylindrische Gehäuse kann an wenigstens einem axialen Ende durch Endstücke ergänzt sein. Die Endstücke können auch als Mittel zur Aufnahme von Motorlagern vorgesehen sein und beispielsweise jeweils ein Lagerschild bilden. Die Endstücke können Mittel zur Führung wenigstens eines Kühlluftstroms in Richtung der weiteren axialen Durchgangsöffnungen bzw. der durch die zweiten Kammern gebildeten Kanäle aufweisen. Eines der Endstücke bzw. Lagerschilde kann Mittel zur Befestigung eines Lüfters aufweisen.

Die Endstücke bzw. Lagerschilde können die Hauptdurchgangsöffnung gegenüber der umgebenden Luft und des Kühlluftstroms abgrenzen, so dass kein Schmutz in die Hauptdurchgangsöffnung, d.h. den Motorinnenraum, eindringen kann.

Der Lüfter kann basierend auf einer Thermostatfunktion betrieben werden.

Es kann eine Einzelspulenansteuerung und/oder Einzelphasenansteuerung zur Bestromung der Statorwicklungen eingesetzt werden (Einzelspule: z.B. 12 Wicklungen mit 12 zugehörigen Ansteuerungen; Einzelphase z.B. 12 Wicklungen mit 6 zugehörige Ansteuerungen, z.B. über Vollbrücken).

Eine radiale Querschnittsfläche der ersten Kammer kann ein regelmäßiges Polygon darstellen, bzw. die Querschnittsfläche der Hauptdurchgangsöffnung des zentralen zylindrischen Gehäuseabschnitts kann ein regelmäßiges Polygon darstellen. Aufgrund des regelmäßigen Polygons bilden sich auf der Außenwand der ersten, inneren Kammer bzw. auf der Oberfläche des inneren Zylinders ebene Flächen, auf die die wärmeerzeugenden Bauelemente einfach wärmeleitend kontaktierbar sind.

Das Motorsystem kann einen als Ring gewickelten Zwischenkreiskondensator aufweisen, der Anschlüsse zum Anschließen an eine sogenannte Busbar aufweisen kann, wobei die Busbar zum Bilden eines Zwischenkreisverbundes dienen kann. Die Busbar kann eine Stromschiene oder eine Verbindung mehrerer Stromschienen mit Anschlüssen zu den einzelnen wärmeerzeugenden Bauelementen und mindestens einer weiteren elektrischen Komponente, insbesondere zu Leistungshalbleitern, aufweisen.

Der Zwischenkreiskondensator kann innerhalb der ersten, axial zylindrischen Kammer angeordnet sein.

Ein Statorpol kann mit dem ihm am nächsten liegenden wärmeerzeugenden Bauelement eine mechanisch verbundene modulare Einheit (Einzelsegment) bildet. Die Phasen können mit der Wicklung des Statorpols elektrisch verbunden sein.

Statorpolgruppen und die sie ansteuernden wärmeerzeugenden Bauelemente können eine mechanische Einheit bilden.

Die wärmeerzeugenden Bauelemente und der Lüfter können B-seitig des Stators angeordnet sein, wobei der Lüfter die Kühlluft durch die Kanäle drückt. Die wärmeerzeugenden Bauelemente können alternativ A-seitig und der Lüfter B-seitig des Stators angeordnet sei, wobei der Lüfter die Kühlluft durch die Kanäle zieht.

Die wärmeerzeugenden Bauelemente können Schaltmittel, beispielsweise IGBTs, sein, wobei die Schaltmittel Mittel zur Bestimmung des geschalteten Stromes aufweisen. Den Schaltmitteln können so genannte Gate-Treiber zugeordnet sein.

Statorwicklungen können derart angesteuert werden, dass die nicht an der Erzeugung des Motormoments beteiligten Wicklungen zur Wandlung der überschüssigen elektrischen Energie beim Bremsen in Wärme genutzt werden. Die Ansteuerung zur Erzeugung von Wärme kann derart gestaltet sein, dass die Beträge der flusssteuernden Ströme (Id) erhöht werden.

Das Motorsystem kann magnetisch und/oder mechanisch wirkende Mittel zur Übersetzung/Untersetzung der Drehzahl des magnetischen Drehfelds gegenüber der Drehzahl eines Motorsystemabtriebs aufweisen.

Das Motorsystem kann eine (elektro-) mechanische Bremse aufweisen, deren Bremstrommel oder Bremsscheibe drehfest mit dem Rotor verbunden ist. Geschaltete Wicklungen der elektromechanischen Bremse können über Energie aus dem Zwischenkreis gespeist werden.

Das magnetische Rotorfeld kann permanentmagnetisch oder elektromagnetisch erzeugt werden.

Zur Drehmomenterzeugung kann der Reluktanzeffekt genutzt werden.

Die Statorwicklungen können derart angesteuert werden, dass in jeder Phase ein Strom mit variabler Frequenz eingeprägt wird, der neben der Grundwelle wenigsten eine Oberwelle enthält, wobei die Amplituden der Grundwelle und der Oberwellen vorzeichenbehaftet vorgegeben und eingeregelt werden können.

Die Statorwicklungen können derart angesteuert werden, dass in jeder Phase ein Strom mit variabler Frequenz eingeprägt wird, der neben der Grundwelle wenigsten eine Subharmonische enthält, wobei die Amplituden der Grundwelle und der Oberwellen vorzeichenbehaftet vorgegeben und eingeregelt werden können.

Das erfindungsgemäße Motorsystem kann ein umhüllendes, geschlossenes und zylindrisches Gehäuse aufweisen, in dem Leistungselektronik, Stator, Rotor sowie ggf. Steuerelektronik und Folienkondensator angeordnet sind. Die Leistungselektronik ist beispielsweise auf Mantelflächen eines inneren Zylinders eines hohlen Strangpressprofils oder eines anderen luftgekühlten Motorgehäuses angeordnet. Es kann ein als Ring gewickelter Folienkondensator mit mehreren Anschlüssen und EMV technisch günstiger niederohmiger und niederinduktiver (kurzer) Anbindung an die Leistungshalbleiter vorgesehen sein.

Es kann eine thermische Sperrschicht zwischen Motoraktivteil und Leistungselektronik vorgesehen sein, beispielsweise in Form eines Kunststoffrings als "Zwischenstück" im Gehäuse.

Ein Lufteinlass kann über Öffnungen in den Lagerschilden in die äußeren Kanäle des Strangpressprofils erfolgen.

Das erfindungsgemäße Motorsystem mit integriertem Frequenzumrichter weist ein umhüllendes zylindrisches Gehäuse auf, in welchem zum einen eine Vielzahl von Wärme erzeugenden elektrischen Leistungsbauteilen und der elektromechanische Wandler (Rotor und Stator) angeordnet sind. Hinzu kommen ggf. die Steuerungselektronik und ein wärmeresistenter Zwischenkreiskondensator (Folienkondensator). Die Lagerschilde schließen das Gehäuse ab, wobei der Zwischenkreiskondensator auch außerhalb der Lagerschilder angeordnet sein kann.

So kann beispielsweise die Leistungselektronik innerhalb eines hohlen Strangpressprofils oder innerhalb eines anderen luftgekühlten Motorgehäuses (z.B. Normgehäuse) örtlich verteilt angeordnet werden. Insbesondere bei Multiphasensystemen oder Einzelwicklungsansteuerung kann die Anzahl an Leistungsmodulen gesteigert werden.

Der Zwischenkreiskondensator kann aus einem als Ring gewickelten Folienkondensator mit mehreren Anschlüssen bestehen, welcher sich zwischen der Motorwelle und dem Gehäuse befindet und gegenüber dem üblichen Elektrolytkondensator eine höhere Temperaturfestigkeit aufweist. Simulationen haben gezeigt, dass das Motorsystem eine Wickelkopftemperatur von ca. 60°C bei 20°C Umgebungstemperatur erreicht (Wirkungsgrad ca. 95%). Der Anschluss der schaltenden Halbleiter erfolgt direkt an den Zwischenkreiskondensator. Dadurch wird eine aus EMV Gesichtspunkten vorteilhafte niederinduktive Anbindung gewährleistet.

Alternativ oder zusätzlich können in das hintere Lagerschild auch noch ein oder mehrere Elektrolytkondensatoren eingebunden werden.

Die Wickelkopftemperatur liegt in etwa auf dem Niveau der Sperrschichttemperatur der Leistungshalbleiter. Der Wärmeintrag der Leistungshalbleiter entspricht dabei in etwa den Kupferverlusten in den Motorwicklungen.

Zwischen dem Aktivteil des Motors und der Leistungselektronik kann eine thermische Sperrschicht angeordnet sein, wobei diese Sperrschicht die erste Kammer in separate axial zueinander versetzte Teilkammern unterteil. Dies ist vorteilhaft, wenn sich die Wickelkopftemperaturen nicht auf das Niveau der Sperrschichttemperatur der Halbleiter absenken lassen.

Die Lüftung kann zwangsbelüftet über einen Fremdlüfter erfolgen. Bei kleineren Leistungen ist eine Wärmeabfuhr auch nur über freie Konvektion möglich.

Der Lufteinlass bei Fremdbelüftung kann über Öffnungen in den Lagerschilden in die Kanäle des Strangpressprofils erfolgen. Sowohl die Leistungselektronik als auch der Aktivteil des Motors kommen nicht mit der Kühlluft oder der Umgebung in direkten Kontakt.

Das Motorsystem kann als permanenterregte Synchronmaschine in Zahnspulentechnik aufgebaut sein, wobei jede Zahnspule mit einem eigenen Leistungshalbleitermodul versehen ist.

Permanenterregte Synchronmaschinen haben im Gegensatz zu Asynchronmaschinen in diesem Konzept zwei Vorteile:
1. sie können sinnvoll in Zahnspulentechnik aufgebaut werden
2. bei gleicher Momentendichte sind mit ihnen höhere Wirkungsgrade zu erzielen.

(1.) führt dazu, dass die schaltenden Leistungshalbleiter direkt mit den Zahnspulen verbunden werden können, wodurch keine weitere Verschaltung der Motorwicklungen mehr nötig ist. Dies senkt den Montageaufwand und vermeidet Fehler.
   Es kann dadurch ebenfalls eine sternpunktlose Maschine aufgebaut werden, indem die Spulen nicht in einem gemeinsamen Sternpunkt zusammengeführt werden. In dieser Maschine können auch Oberwellen der eingeprägten Ströme zur Bildung eines konstanten Drehmomentes genutzt werden. Auch kann es ohne einen Sternpunkt nicht zu einem Stromfluss über diesen kommen, dadurch werden Lagerströme o.ä. systembedingt ausgeschlossen.
(2.) Führt zu geringerem Wärmeeintrag und somit zu einer höheren Leistungsdichte des Gesamtsystems bzw. einem kompakteren System bei gleicher Leistung.

Erfindungsgemäß ist es nicht mehr notwendig, elektrische Verbindungen von einem extern angeordneten (Frequenz-) Umrichter in das Motorgehäuse vorzusehen. Es ist kein separates Umrichtergehäuse zum Anbau an das Maschinengehäuse mehr notwendig. Die Anzahl der elektrischen Verbindungselemente (Steckverbinder, Leitungen etc.) und somit der Montageaufwand sinkt, da Umrichter und Motor in einem Gehäuse verbaut sind. Die örtliche Verteilung des Wärmeeintrags der Leistungshalbleiter führt zu einer homogeneren Erwärmung des gesamten Antriebs, wodurch die effektiv wirksame Kühlfläche vergrößert wird.

Der Wärmeeintrag kann an mehr als 3 Orten erfolgen und ist deswegen örtlich weniger konzentriert.

Da die in der ersten Kammer angeordneten Elemente weder über die Kühlluft noch über eine andere Art mit der Umgebung in direktem Kontakt stehen, sind beliebig hohe IP- (International Protection) und auch sonstige Schutzklassen z.B. explosionsgeschützt etc. erreichbar.

Die Führung der Kühlluft in geschlossenen Kanälen sorgt dafür, dass der dem Lüfter abgewandte Teil (meist der vordere Teil) besser gekühlt wird, als wenn die Kühlluft vom Lüfter über offenen Rippen geblasen wird, wie dies z.B. bei Norm-Asynchronmaschinen und allen bisher am Markt verfügbaren kompakt Servoantrieben mit Fremdlüftern der Fall ist.

Die Erfindung wird nachfolgend unter Bezugnahme auf die Zeichnungen detailliert beschrieben. Hierbei zeigen:
- Fig. 1: ein erfindungsgemäßes Motorsystem in einem Längsschnitt und
- Fig. 2: einen Ausschnitt des in Fig. 1 dargestellten Motorsystems in perspektivischer Darstellung.

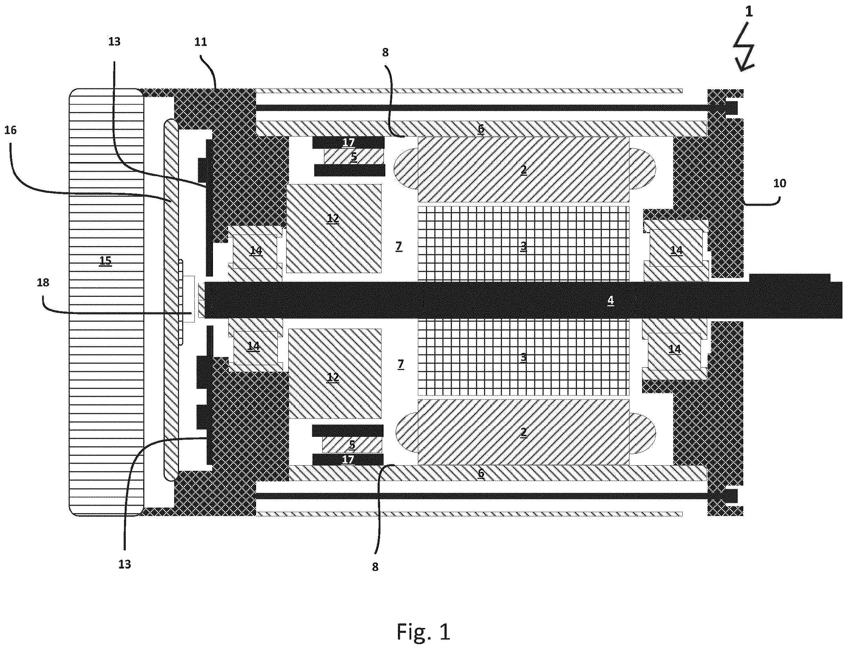

Fig. 1 zeigt ein erfindungsgemäße Motorsystem 1.

Das Motorsystem 1 weist zunächst einen Stator 2, einen Rotor 3 und eine Motorwelle 4 auf, die mit dem Rotor 3 drehfest mechanisch gekoppelt ist und die eine radiale Richtung und eine axiale Richtung des Motorsystems 1 definiert. Axial bedeutet in Motorwellenlängsrichtung bzw. in Richtung der Drehachse der Motorwelle 4. Radial bedeutet senkrecht zur Drehachse der Motorwelle 4.

Das Motorsystem 1 weist weiter wärmeerzeugende Bauelemente 5 in Form von Leistungshalbleitern bzw. Leistungsmodulen auf.

Weiter weist das Motorsystem 1 eine Steuereinrichtung 13 in Form eines Frequenzumrichters auf, der dazu ausgebildet ist, einen Betrieb des Motorsystems 1 zu steuern.

Weiter weist das Motorsystem 1 einen als Ring gewickelten Zwischenkreiskondensator 12 auf.

Das Motorsystem 1 ist in einem Gehäuse 6 in Form eines zylindrischen Strangpressprofils aufgenommen. Das Gehäuse 6 weist eine erste, zentrale, zylindrische, sich in axialer Richtung erstreckende Kammer 7 auf, wobei der Stator 2, der Rotor 3, die wärmeerzeugenden Bauelemente 5 und der Zwischenkreiskondensator 12 innerhalb der ersten Kammer 7 angeordnet sind. Die wärmeerzeugenden Bauelemente 5 sind mit einer Außenwand 8 der ersten Kammer 7 wärmeleitend verbunden.

Zwischen der Außenwand 8 und den jeweiligen wärmeerzeugenden Bauelementen 5 sind wärmeleitende Adapterplatten 17 angeordnet, wobei die wärmeerzeugenden Bauelementen 5 mittels Druckbeaufschlagungsmitteln 17 gegen die Adapterplatten 17 gedrückt werden, um die Wärmeleitung zu verbessern.

Das Gehäuse 6 weist einen inneren Zylinder auf, der die erste Kammer 7 bildet, wobei eine Mantelfläche des Zylinders die Außenwand 8 darstellt. An seinen Stirnseiten weist das Motorsystem 1 ein erstes Lagerschild 10 bzw. ein zweites Lagerschild 11 jeweils mit Motorwellenlagern 14 auf, wobei eine Grundfläche des inneren Zylinders durch das erste Lagerschild 10 gebildet wird und eine Deckfläche des inneren Zylinders durch das zweite Lagerschild 11 gebildet wird.

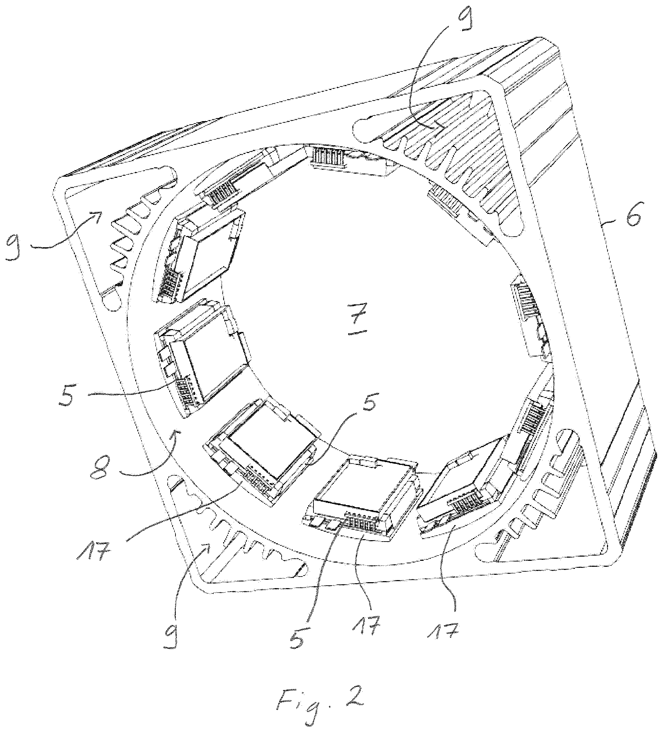

An der B-Seite des Motorsystems 1 ist ein Lüfter 15 vorgesehen, der Kühlluft in geschlossene Kühlkanäle des zylindrischen Strangprofils 6 presst, siehe hierzu auch die nachfolgende Beschreibung unter Bezugnahme auf Fig. 2.

An der B-Seite wird das Motorsystem 1 mittels eines Gehäusedeckels 16 lösbar verschlossen.

Ein Sensor 18 dient zur Erfassung der Rotorlage. Der Sensor 18 ist insbesondere ein Sensor, der die Orientierung des Magnetfeldes erfassen kann. Hieraus wird die Rotorlage ermittelt bzw. ausgewertet. Alternativ kann auch ein üblicher Rotorlagegeber (Resolver, Encoder, ...) verwendet werden.

Die Steuereinrichtung 13, der Sensor 18, die wärmeerzeugenden Bauelemente 5 bzw. Leistungshalbleiter, der Stator 2, der Lüfter 15 und gegebenenfalls weitere Bauelemente können miteinander in Wirkverbindung stehen, wobei die Steuereinrichtung 13 Sensorsignale empfängt und auswertet und geeignete Ansteuersignale für die Aktoren erzeugt.

Fig. 2 zeigt einen Ausschnitt des in Fig. 1 dargestellten Motorsystems in perspektivischer Darstellung.

Wie in Fig. 2 gezeigt, weist das Stranggussprofil 6 neben der ersten, zentralen, zylindrischen Kammer 7 vier zweite Kammern 9 auf. Die zweiten Kammern 9 umgeben die erste Kammer 7 radial bzw. außenseitig. Die zweiten Kammern 9 sind mit Kühllammelen versehen.

Die zweiten Kammern 9 bilden geschlossene Kanäle zur Führung von Kühlluft, die vom Lüfter 15 in die Kammern 9 gedrückt bzw. durch die Kammern 9 gesogen wird. Aufgrund der guten thermischen Kopplung zwischen der Außenfläche 8 der inneren Kammer 7 und den Kanälen 9 und der Vielzahl von Kontaktstellen der Leistungshalbleiter 5 mit der Außenfläche 8 kann viel Wärmeenergie durch die Kanäle 8 abgeführt werden.

Bei der in Fig. 2 gezeigten Ausführungsform ist das Gehäuse 6 als ein innerer Kreiszylinder mit innerem Zylindermantel 8 gebildet, der von einem äußeren Zylinder umgeben ist, dessen radialer Querschnitt quadratisch ist. Äußerer und innerer Zylinder sind an vier Verbindungsstellen miteinander verbunden. Alternativ kann auch der äußere Zylinder ein Kreiszylinder sein, wobei innerer und äußerer Kreiszylinder für diesen Fall mittels Stegen oder Domen miteinander verbunden sein können, wobei die Stege bzw. Dome die Kühlkanäle definieren.

## Patentansprüche

1. Motorsystem (1), aufweisend:
- einen Stator (2),
- einen Rotor (3),
- eine Motorwelle (4), die mit dem Rotor (3) drehfest mechanisch gekoppelt ist und die eine radiale Richtung und eine axiale Richtung des Motorsystems (1) definiert,
- wärmeerzeugende Bauelemente (5), insbesondere Leistungshalbleiter,
- eine Steuereinrichtung (13), die dazu ausgebildet ist, einen Betrieb des Motorsystems (1) zu steuern, und
- ein Gehäuse (6), wobei das Gehäuse (6) aufweist:
- eine erste, zentrale Kammer (7), wobei der Stator (2), der Rotor (3) und die wärmeerzeugenden Bauelemente (5) innerhalb der ersten Kammer (7) angeordnet sind, wobei die wärmeerzeugenden Bauelemente (5) mit einer Außenwand (8) der ersten Kammer (7) verbunden sind, und
- eine Anzahl von zweiten Kammern (9), wobei die zweiten Kammern (9) die erste Kammer (7) radial umgeben,
- die zweiten Kammern (9) geschlossene Kanäle zur Führung von Kühlluft bilden,
**dadurch gekennzeichnet, dass**
- die zweiten Kammern (9) oberflächenvergrößernde Strukturen aufweisen.

2. Motorsystem (1) nach Anspruch 1, **dadurch gekennzeichnet, dass**
- das Gehäuse (6) einen inneren Zylinder aufweist, der die erste Kammer (7) bildet, wobei eine Mantelfläche des Zylinders die Außenwand (8) bildet.

3. Motorsystem (1) nach Anspruch 2, **dadurch gekennzeichnet, dass**
- das Gehäuse (6) eine Anzahl von äußeren Zylindern aufweist, die die Anzahl von zweiten Kammern (9) bilden.

4. Motorsystem (1) nach einem der vorhergehenden Ansprüche, **dadurch gekennzeichnet, dass**
- das Gehäuse (6) ein zylindrisches Stranggussprofil aufweist.

5. Motorsystem (1) nach einem der Ansprüche 2 bis 4, **dadurch gekennzeichnet, dass**
- das Motorsystem (1) ein erstes und ein zweites Lagerschild (10, 11) aufweist, wobei eine Grundfläche des inneren Zylinders durch das erste Lagerschild (10) gebildet wird und eine Deckfläche des inneren Zylinders durch das zweite Lagerschild (11) gebildet wird.

6. Motorsystem (1) nach einem der vorhergehenden Ansprüche, **dadurch gekennzeichnet, dass**
- der Stator (2) und die wärmeerzeugenden Bauelemente (5) axial voneinander beabstandet angeordnet sind.

7. Motorsystem (1) nach einem der vorhergehenden Ansprüche, **dadurch gekennzeichnet, dass**
- die wärmeerzeugenden Bauelemente (5) innerhalb eines vorgegebenen axialen Abschnitts mit der Außenwand (8) der ersten Kammer (7) wärmeleitend verbunden sind.

8. Motorsystem (1) nach einem der vorhergehenden Ansprüche, **dadurch gekennzeichnet, dass**
- eine radiale Querschnittsfläche der ersten Kammer (7) ein regelmäßiges Polygon darstellt.

9. Motorsystem nach einem der vorhergehenden Ansprüche, **dadurch gekennzeichnet, dass**
- das Motorsystem einen als Ring gewickelten Zwischenkreiskondensator (12) aufweist.

10. Motorsystem nach einem der vorhergehenden Ansprüche, **dadurch gekennzeichnet, dass**
- die erste Kammer axial in eine Anzahl von Teilkammern segmentiert ist, die mittels thermischer Sperrschichten voneinander thermisch isoliert sind.

## Claims

1. Motor system (1), comprising.
- a stator (2),
- a rotor (3),
- a motor shaft (4), which is mechanically coupled for conjoint rotation with the rotor (3), and which defines a radial direction and an axial direction of the motor system (1),
- heat-generating components (5), in particular power semiconductors,
- a control device (13), which is designed to control an operation of the motor system (1), and
- a housing (6), said housing (6) comprising:
- a first central chamber (7), wherein the stator (2), the rotor (3) and the heat-generating components (5) are arranged inside the first chamber (7), wherein the heat-generating components (5) are connected to an outer wall (8) of the first chamber (7), and
- a number of second chambers (9), wherein the second chambers (9) radially surround the first chamber (7),
- the second chambers (9) form closed channels for guiding cooling air, **characterized in that**
- the second chambers (9) include surface enlarging structures.

2. Motor system (1) according to claim 1, **characterized in that**
- the housing (6) comprises an inner cylinder which forms the first chamber (7), wherein an outer surface of the cylinder constitutes the outer wall (8).

3. Motor system (1) according to claim 2, **characterized in that**
- the housing (6) comprises a number of outer cylinders which form the number of second chambers (9).

4. Motor system (1) according to any of the preceding claims, **characterized in that**
- the housing (6) comprises a cylindrical extrusion profile.

5. Motor system (1) according to any of the claims 2 to 4, **characterized in that**
- the motor system (1) comprises a first and a second bearing plate (10, 11), wherein a base surface of the inner cylinder is formed by the first bearing plate (10) and a cover surface of the inner cylinder is formed by the second bearing plate (11).

6. Motor system (1) according to any of the preceding claims, **characterized in that**
- the stator (2) and the heat-generating components (5) are axially spaced apart from one another.

7. Motor system (1) according to any of the preceding claims, **characterized in that**
- the heat-generating components (5), within a predetermined axial portion, are connected to the outer wall (8) of the first chamber (7) in a heat-conducting manner.

8. Motor system (1) according to any of the preceding claims, **characterized in that**
- a radial cross-sectional area of the first chamber (7) presents a regular polygon.

9. Motor system according to any of the preceding claims, **characterized in that**
- the motor system comprises an intermediate circuit capacitor (12) wound as a ring.

10. Motor system according to any of the preceding claims, **characterized in that**
- the first chamber is segmented axially into a number of part-chambers which are thermally insulated from one another by means of thermal barrier layers.

## Revendications

1. Système moteur (1) comprenant :
- un stator (2),
- un rotor (3),
- un arbre moteur (4) accouplé mécaniquement et solidairement en rotation au rotor (3) et définissant une direction radiale et une direction axiale du système moteur (1),
- des composants générateurs de chaleur (5), en particulier des semi-conducteurs de puissance,
- un dispositif de commande (13) conçu pour commander le fonctionnement du système moteur (1), et
- un boîtier (6), le boîtier (6) comportant :
- une première chambre centrale (7), le stator (2), le rotor (3) et les composants générateurs de chaleur (5) étant disposés à l'intérieur de la première chambre (7), les composants générateurs de chaleur (5) étant reliés à une paroi extérieure (8) de la première chambre (7), et
- un certain nombre de deuxièmes chambres (9), les deuxièmes chambres (9) entourant radialement la première chambre (7),
- les deuxièmes chambres (9) formant des canaux fermés destinés à guider l'air de refroidissement, **caractérisé en ce que**
- les deuxièmes chambres (9) comportent des structures d'extension de surface.

2. Système moteur (1) selon la revendication 1, **caractérisé en ce que**
- le boîtier (6) comporte un cylindre intérieur qui forme la première chambre (7), une surface d'enveloppe du cylindre formant la paroi extérieure (8).

3. Système moteur (1) selon la revendication 2, **caractérisé en ce que**
- le boîtier (6) comporte un certain nombre de cylindres extérieurs qui forment le nombre de deuxièmes chambres (9).

4. Système moteur (1) selon l'une des revendications précédentes, **caractérisé en ce que**
- le boîtier (6) présente un profil de coulée continue cylindrique.

5. Système moteur (1) selon l'une des revendications 2 à 4, **caractérisé en ce que**
- le système moteur (1) a un premier et un deuxième flasque (10, 11), une surface de base du cylindre intérieur étant formée par le premier flasque (10) et une surface supérieure du cylindre intérieur étant formée par le deuxième flasque (11).

6. Système moteur (1) selon l'une des revendications précédentes, **caractérisé en ce que**
- le stator (2) et les composants générateurs de chaleur (5) sont disposés en étant espacés axialement.

7. Système moteur (1) selon l'une des revendications précédentes, **caractérisé en ce que**
- les composants générateurs de chaleur (5) sont reliés de manière conductrice de chaleur à la paroi extérieure (8) de la première chambre (7) dans une portion axiale prédéterminée.

8. Système moteur (1) selon l'une des revendications précédentes, **caractérisé en ce que**
- une section radiale de la première chambre (7) représente un polygone régulier.

9. Système moteur selon l'une des revendications précédentes, **caractérisé en ce que**
- le système moteur comporte un condensateur de circuit intermédiaire (12) enroulé en anneau.

10. Système moteur selon l'une des revendications précédentes, **caractérisé en ce que**
- la première chambre est segmentée axialement en un certain nombre de sous-chambres qui sont isolées thermiquement les unes des autres au moyen de couches formant barrière thermique.
